# EUROPEAN PATENT SPECIFICATION

(11) **EP 0 311 265 B1**
(45) Date of publication and mention of the grant of the patent: **08.06.1994**
(21) Application number: 88308583.9
(22) Date of filing: 16.09.1988
(51) Int. Cl.: H04N 1/411, H04N 1/413

(54) **Method and apparatus for processing picture element (pel) signals of an image**
Verfahren und Vorrichtung zur Verarbeitung von Bildelementsignalen
Procédé et appareil de traitement de signaux d'éléments d'images

(30) Priority: 09.10.1987 JP 253925/87
(43) Date of publication of application: 12.04.1989
(73) Proprietor: International Business Machines Corporation, Armonk, N.Y. 10504 (US)
(72) Inventor: Itoh, Masaharu, 5-3-1 Kukada Tamato-shi Kanagawa-ken (JP); Toyokawa, Kazuharu, Yamato-shi Kanagawa-ken (JP); Yanagisawa, Hiroshi, Kamakura-shi Kanagawa-ken (JP)
(74) Representative: Burt, Roger James, Dr.

(56) References cited:
- EP-A- 0 215 229
- US-A- 3 956 578
- IBM JOURNAL OF RESEARCH AND DEVELOPMENT. vol. 28, no. 2, March 1984, NEW YORKUS pages 135 - 149; Glen G.Langdon, Jr: "An Introduction to Arithmetic Coding"

## Description

### Field of the Invention

The invention relates to a method and apparatus for processing image data of a text document. More particularly, the invention relates to a transmission of compressed data representing the image data of the text document between a terminal unit and a host processor.

### Prior Art and Problems

In an image processing systems, an image of an original document is scanned by an image scanner which includes an image sensor unit. The image sensor unit has provided with plural sensor elements. The number of sensor elements/inch defines the resolution of the image scanner. Each sensor element defines one pel and generates an analog signal representing each pel of the image of the original document. The analog signals are converted to digital signals which are compressed by image compression algorithm, such as Modified Read, arithmetic coding, which has been well known in the art. The compressed data representing the image is transmitted to a memory in a host processor. The stored compressed data is read out and decompressed. The decompressed data is supplied to an output device, such as a display unit, a printer, which has various resolution, such as 120 pels/inch, 240 pels/inch. It is assumed that the resolution of the original image is 240 pels/inch and the resolution of the display unit is 120 pels/inch. The display unit does not need the data of 240 pels/inch resolution. In this case, the compressed data of the 240 pels/inch resolution is transmitted from the host processor to a terminal unit. The received compressed data is decompressed by an image decompression algorithm to reproduce the original image of 240 pels/inch resolution, and the reproduced image is scaled to generate the image of 120 pels/inch resolution. The display unit requires the data of 120 pels/inch resolution, nevertheless the transmission and decompression of the high volume data of 240 pels/inch resolution are required. To solve the problem, i.e. the transmission and decompression of the high volume data, it might be possible for the host systems to prepare both compressed data of 240 pels/inch resolution and compressed data of 120 pels/inch resolution and to store them in the memory. This approach solves the above problem, but another problem arises which requires about 1.5 times memory space for the compressed data of 120 pels/inch and 240 pels/inch resolutions.

Copending commonly assigned patent application Serial No. 686578 (corresponding to EP-A-0 146 728), filed December 27, 1984, inventors M. Itoh, H. Yanagisawa and T. Yokemura discloses an image processing system wherein an original image is converted to a low resolution image, i.e. base image, by a pel density conversion algorithm, then, the same density image as the original image is predicted from the base image, the predicted image and the original image are compared to generate error compensation data and both the base image and error compensation data are compressed and stored for a later image reproducing process. The process of the application is similar to the invention in constructing two layered data base, but the invention has a remarkable difference in an algorithm for compression and decompression of the second layer.

Copending commonly assigned patent application 891813 (corresponding to EP-A-0 215 229), filed July 31, 1986, inventor K. Toyokawa discloses a system for compressing bi-level data wherein history pels which are adjacent pels to a current pel being processed and pels so separated from the adjacent pels as to adapt to a period of a dither matrix are samples, and it is determined from the sampled pels whether the image has a dither dominant image pattern or a text-graphic dominant image pattern. The application, however, does not relate to the construction of the two layered data base.

Glen G. Langdon, Jr. "An Introduction to Arithmetic Coding", IBM Journal of research and development, Vol. 28, No. 2, March 1984, pp. 135 - 149 describes the basic concept of the arithmetic coding for compressing an original data and for decompressing or reproducing the original data from the compressed data.

Arranging image data in a hierarchical or pyramidal manner is well known in the art and described, for example, in US Patent 4222076 and K R Sloan Jr and S L Tanimoto, "Progressive Refinement of Raster images", IEEE Transactions on Computers, Vol C-28, No 11, November 1979, pp 871 - 874. However, the image data structures have been devised with the purpose of data retrieving, and the data contents of the respective layers are different from those of the invention. Further, the hierarchical systems have a disadvantage that larger storage space is required as compared with the present invention.

### Summary of the Invention

The invention realizes a reduction of compressed data representing an original image of a text document and a high reproduction of the original image.

According to the invention there is provided an apparatus for processing pel signals of an original image comprising: an input image buffer for storing pel signals representing said original image in pel positions arranged in rows and columns; a data compression means for generating first compressed data representing first pel signals stored in a first set of pel positions in said input image buffer, said first set comprising the positions at the intersections of every other one of said rows with every other one of said columns, and second compressed data representing remaining pel signals stored in the remaining pel positions in said input image buffer; a data memory for storing said first compressed data and said second compressed data; a data decompression means for decompressing said first compressed data to reproduce first pel signals, and decompressing said second compressed data to reproduce second pel signals; an output image buffer storing said first reproduced pel signals in a first set of pel positions and storing said second reproduced pel signals in the remaining pel positions, wherein the pel positions in said output image buffer are arranged in rows and columns and said first set of positions in said output image buffer comprises the positions at the intersections of every other one of the rows with every other one of the columns; characterised in that, during said generation of said first compressed data, each pel signal stored in said first set of pel positions in said input image buffer is sequentially fetched from the buffer together with a sample plurality of neighbouring pel signals in said first set of pel positions, and, during said generation of said second compressed data, each pel signal stored in said remaining pel positions is sequentially fetched from the input image buffer together with a sample plurality of neighbouring pel signals including at least one pel signal in one of said remaining pel positions and plural pel signals in said first set of pel positions, said first and second compressed data being generated, for each pel signal, in dependence on the respective sample plurality of neighbouring pel signals.

According to a second aspect of the invention there is provided a method for processing pel signals of an original image comprising the steps of:
(a) storing pel signals representing said original image in pel positions of an input image buffer, said pel positions being arranged in rows and columns;
(b) sequentially fetching one pel signal stored in one of a first set of pel positions in said input image buffer along with plural neighbouring pel signals stored in said first set of pel positions, said first set comprising the pel positions at the intersections of every other one of said rows with every other one of said columns;
(c) supplying said one pel signal along with said plural neighbouring pel signals to a data compression means for generating, in dependence on said plural neighbouring pel signals, first compressed data representing said pel signals stored in said first set of pel positions;
(d) storing said first compressed data in a data memory;
(e) sequentially fetching a first remaining pel signal stored in one of the remaining pel positions in said input image buffer along with plural neighbouring pel signals including at least one remaining pel signal and plural pel signals stored in said first set of pel positions;
(f) supplying said first remaining pel signal along with said plural neighbouring pel signals to said data compression means for generating, in dependence on said plural neighbouring pel signals, second compressed data representing said pel signals stored in said remaining pel positions;
(g) storing said second compressed data in said data memory;
(h) supplying said first compressed data to a data decompression means for reproducing first pel signals;
(i) storing said first pel signals in a first set of pel positions in an output image buffer, wherein the pel positions in said output image buffer are arranged in rows and columns and said first set of positions in said output image buffer comprises the pel positions at the intersections of every other one of said rows and every other one of said columns.
(j) supplying said second compressed data to said data decompression means for reproducing second pel signals; and
(k) storing said second pel signals in remaining pel positions of said output image buffer.

The original image of the text document is scanned by an image scanner of a resolution of 240 pel/inch in a terminal device. The resolution of 240 pel/inch is called as the 240 pel resolution hereinafter. The pel means picture element. The image scanner generates pel signal or binary data for each pel of the original image sampled at the 240 pel resolution. The pel signals of the 240 pel resolution are stored in an input image buffer of the 240 pel resolution of the terminal device.

The pel signals stored in pel positions of the input image buffer are selectively fetched to generate a first compressed data stream of image pel of 120 pel resolution, ie a resolution of 120 pel/inch, and a second compressed data stream of remaining pels. It is noted that the pel positions of the input image buffer are classified into a first set of pel positions (hereafter "every other" pel positions) and remaining pel positions. The pel signals or binary data at the every other pel positions represent an image of 120 pel resolution of the text document, the first set comprising the positions at the intersections of every other one of the rows of pel positions with every other one of the columns of pel positions. The pel signals stored at the remaining pel positions are called remaining pel signals, and the remaining pel signals represent the remaining pels of the text document of the 240 pel resolution consists of the pels of the 120 pel resolution and the remaining pels.

To selective fetching the pel signals stored in the input image buffer, four sampling windows are prepared. A first sampling window fetches one pel signal, as a current pel signal being processed, stored at one of the every other pel positions and a plurality of neighbouring pel signals stored at the every other pel positions. The sampling points of the first window are arranged at the 120 pel resolution. Second, third and fourth sampling windows are used to fetch or sample both pel signals of the 120 pel resolution and remaining pel signals in various combinations. Patterns of the second, third and fourth sampling windows differ from each other. The sampling points of the second, third and fourth windows are arranged at the 240 pel resolution.

To generate the first compressed data of the image pels of the 120 pel resolution, an adaptive arithmetic compression algorithm in a control unit of the terminal device selects, the first window and accesses the input image buffer. By initially locating the first window at the leftmost and uppermost pel position of the input image buffer and moving the first window in horizontal and vertical directions to scan all of the every other pel positions, one current pel signal and the plural neighbouring pel signals are sequentially fetched and supplied to an adaptive arithmetic coding compression/decompression unit of the terminal device which generates the first compressed data of the image pel of the 120 pel resolution, and the first compressed data is transmitted to and stored in a data memory of a host processor.

Next, the compression algorithm selects one of the second, third and fourth windows depending upon the position of a remaining pel signal, i.e. current pel signal being processed. The current pel signal and the plural neighbouring pel signals including both the remaining pel signal and pel signals of the 120 pel resolution are fetched in accordance with the pattern of the selected window, and are supplied to the adaptive arithmetic coding compression/decompression unit to generate the second compressed data of the remaining pels. The second compressed data is transmitted to and stored in the data memory in the host processor.

Now, the data memory of the host processor stores both the first compressed data of the image pels of the 120 pel resolution and second compressed data of the remaining pels.

The terminal device has provided with a display unit of the 120 pel resolution and a printer of the 240 pel resolution. When it is required to display the image of the text document on the display unit of the 120 pel resolution, only the first compressed data of the image pels of the 120 pel resolution is fetched from the data memory and transmitted to the adapter arithmetic coding compression/decompression unit of the terminal device. An adaptive arithmetic coding decompression algorithm of the control unit of the terminal device selects the first sampling window which was used in the compression of the image pels of the 120 pel resolution. Contents of an output image buffer into which the reproduced pel signals are stored are reset. The output image buffer also has pel positions of the 240 pel resolution. The decompression algorithm positions or locates the first window at the first pel position of the every other pel positions. Only plural neighbouring pel signals among pel signals sampled by the first window are supplied to the adaptive arithmetic coding compression/decompression unit along with the first compressed data. The adapter arithmetic coding compression/decompression unit reproduces a first pel signal of the image pels of the 120 pel resolution and stores it in the first pel position of the every other pel positions of the output image buffer. The decompression algorithm shifts the first window by two pel positions on the output image buffer, reproduces a second pel signal and stores it in the second position of the every other pel positions, in the same manner. The decompression algorithm, in this manner reproduces the image of the 120 pel resolution, and stores them in the output image buffer. The control unit supplies the image of the 120 pel resolution to the display unit of the 120 pel resolution.

When it is required to print the original image of the text document by the printer of the 240 pel resolution, the fetch and decompression process of the first decompressed data and the fetch and decompression process of the second decompressed data are sequentially performed. The fetch and decompressed process of the first decompressed data is the same as that described above. It is assumed, therefore, that the pel signals of the image pels of the 120 pel resolution have been already stored in the every other pel positions of the output image buffer. The second compressed data of the remaining pels stored in the data memory of the host processor is transmitted to the adapter arithmetic coding compression/decompression unit of the terminal device. The decompression algorithm decompresses the second compressed data to reproduce the remaining pel signals and stores them into the remaining pel positions of the output image buffer. To perform this process, the decompression algorithm detects the position on the output image buffer of remaining pel signal being reproduced, and selects one of the second, third and fourth windows, which were used in the compression of the remaining pels, in accordance with the detected position. Only plural neighbouring pel signals among pel signals sampled by the selected window are supplies to the adaptive arithmetic coding compression/decompression unit along with the second compressed data. The adaptive arithmetic coding compression/decompression unit reproduces the remaining pel signal and stores it in the remaining pel position of the output image buffer. The decompression algorithm seeks the second remaining pel position into which the secondary reproduced remaining pel signal is stored, and selects one of the second, third and fourth window in accordance with the detected position, and reproduces the remaining pel signal, and stores it in the second remaining pel position of the output image buffer. In this manner, the remaining pel signals are sequentially reproduced. And, at the completion of the reproduction of the remaining pel signals, the output image buffer contains the original image of the 240 pel resolution. The reproduced image is supplied to the printer of the 240 pel resolution.

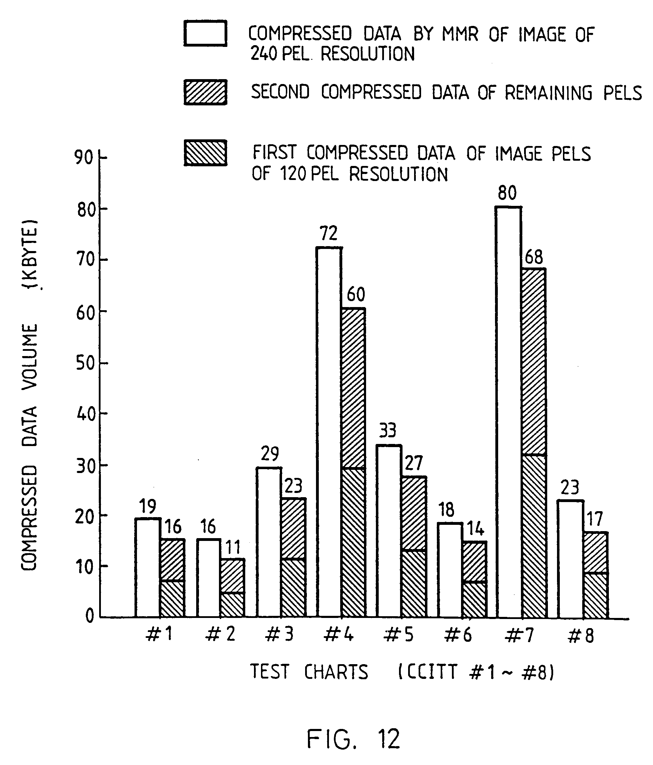

As stated above, in accordance with the present invention, the plurality of windows having different sampling patterns from each other are prepared for processing the remaining pel signals, and one of the plural windows is selected in accordance with the pel position of the current remaining pel signal being compressed or decompressed. It has been found by the inventors that the preparation of the plurality of windows and the selection of one of the windows in accordance with the position of the current remaining pel signal in compressing the remaining pel signals of the text image by use of the adaptive arithmetic coder have remarkably reduced the data volume of the compressed data, as described hereinafter with respect to Figure 12.

In order that the invention may be fully understood a preferred embodiment will now be described with reference to the accompanying drawings in which:-
Figure 1 shows a block diagram of an image processing apparatus in accordance with the present invention;
Figure 2 and 3 shows a sampling window positioned to sample the pel signals stored in the every other pel positions, respectively;
Figure 4 shows a flow chart explaining the generation of the first and second compressed data;
Figure 5 shows the positions of the remaining pel signals X1, X2 and X3;
Figure 6 shows the sampling window 31 selected for the remaining pel signal X1;
Figure 7 shows the sampling window 32 selected for the remaining pel signal X2;
Figure 8 shows the sampling window 33 selected for the remaining pel signal X3;
Figure 9 shows the examples of compressing the remaining pel signals X1, X2 and X3;
Figure 10 shows a flow chart explaining the decompression of the first and second compressed data;
Figure 11 shows the examples of decompressing the every other pel signal X, and the remaining pel signals X1, X2 and X3; and
Figure 12 shows the experimental results for comparing the data volumes performed in accordance with the present invention with the data volumes of the MMR algorithm.

### Description of Embodiment

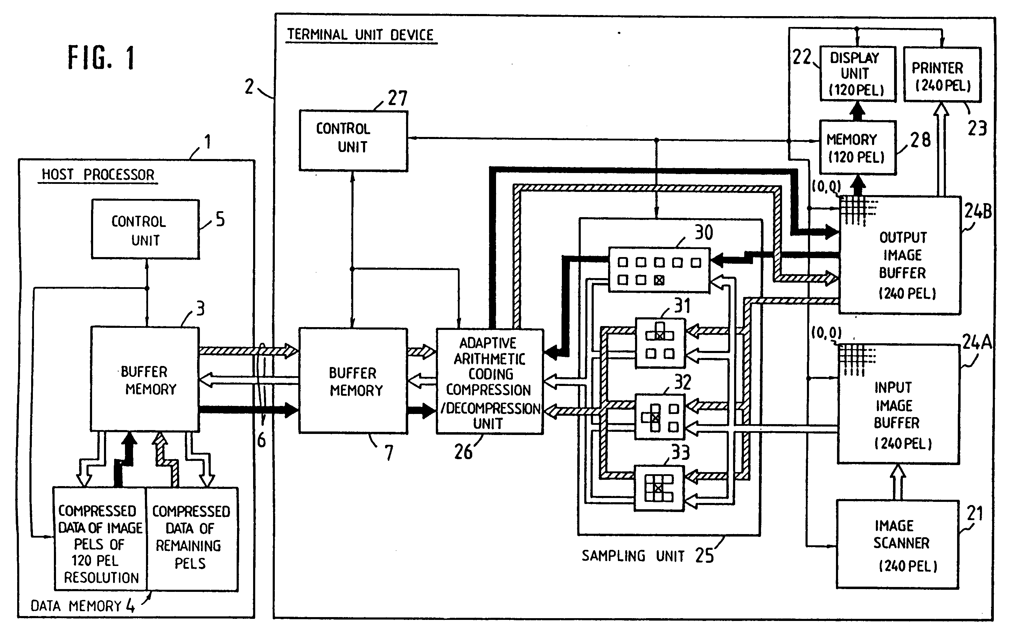

Figure 1 shows a host processor 1 and a terminal device 2 connected through a transmission line 6. The host processor 1 includes a buffer memory 3, a data memory 4 and a control unit 5. The terminal device 2 includes a buffer memory 7, an image scanner 21 of 240 pel resolution, a display unit 22 of 120 pel resolution, a printer 23 of 240 pel resolution, an input image buffer 24A, an output image buffer 24B, a sampling unit 25, an adaptive arithmetic coding compression/decompression unit 26, and a control unit 27. The both input and output image buffers 24A and 24B have pel positions of the 240 pel resolution. An original image of a text document, not shown, is scanned by the image scanner 21 of the 240 pel resolution, which generates binary bits or pel signals representing the original image. Black pel on the image is represented by binary 1 and white pel on the image is represented by binary 0. The binary bits or the pel signals representing the original image are stored in the input image buffer 24A. The coordinate value (0, 0) of the input image buffer 24A indicates the position of the left most and upper most pel of the original image.

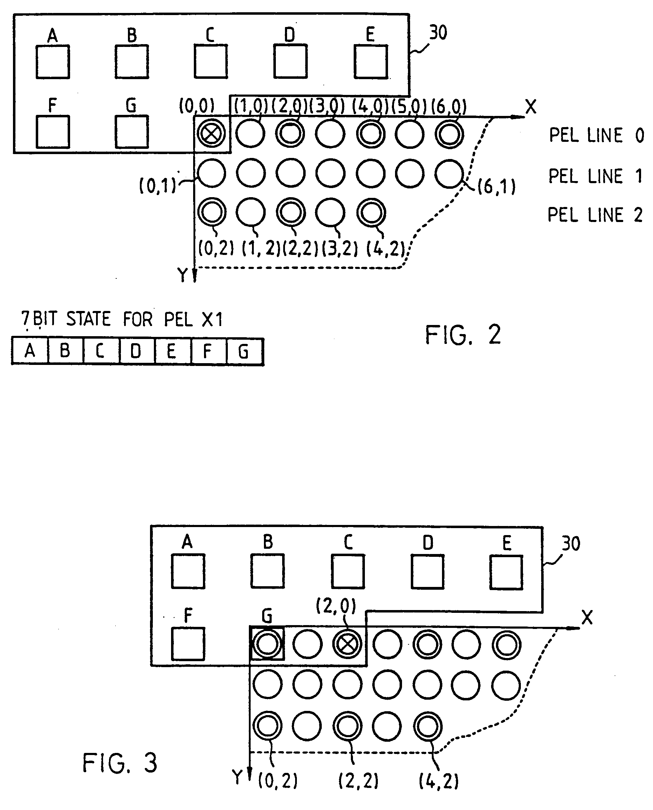

Describing the image pels of the 120 pel resolution and the remaining image pels with referring to Figure 2, which shows the leftmost and uppermost portion of the original image. Double circled pels i.e. every other pels, in the Figure 2 represent the image pels of the 120 pel resolution, and single circled pels represent the remaining pels.

### Generation of the First Compressed Data of the Image Pels of the 120 Pel Resolution

The flow of the data is in the process is shown by white thick arrows in the Figure 1. Under the control of the compression algorithm of the control unit 27, the sampling unit 25 selects a template or sampling window 30. The symbol X in the Figure 2 represents the current pel signal being processed. The compression process is started from the leftmost and uppermost pel at position (0, 0) in the input image buffer 24A. The sampling unit 25 positions or locates the window 30 at the position shown in the Figure 2 to process the current pel X, under the control of the compression algorithm.

Sampling points A, B, C, D, E, F, G and X of the window 30 are spaced by one pel position in the input and output image buffers, to sample the current pel signal X at one of the every other pel positions shown by the double circles and seven neighbouring pel signals at the every other pel positions. The every other pel positions store the pel signals of the image pel of the 120 pel resolution.

The seven sampling points A through G of the window 30 shown in the Figure 2 is viewing the outside area of the image and this outside area are deemed as the white, i.e. binary 0. All sampled seven bits A through G of the binary 0 and the current pel signal X are supplied to the adaptive arithmetic coding compression/decompression unit 26, which includes a state table, an adaptive arithmetic coder and an adaptive arithmetic decoder, as described in the article by Glen G. Landon, Jr. The state table is shown in the following Table.

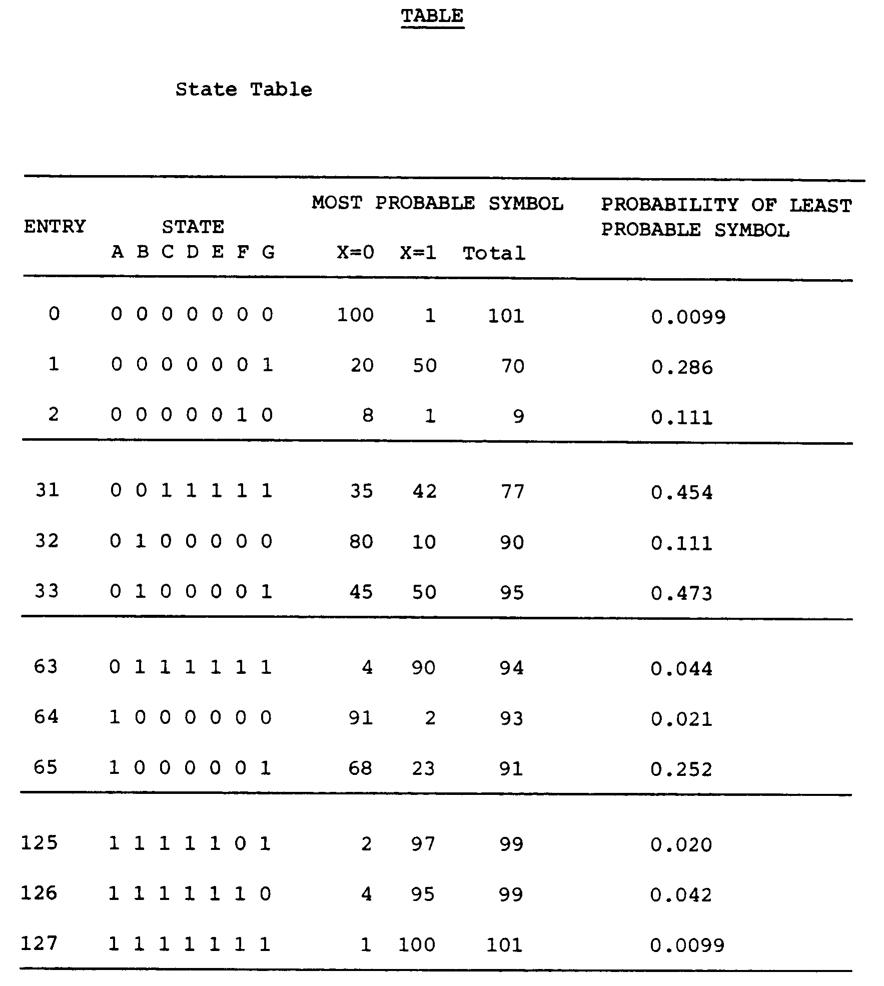

The first and second columns of the state table indicate entry and state. The state represents the bit pattern A through G sampled by the windows 30. The third column indicates the most probable symbol which is predicted based upon the bit pattern sampled by the window. The fourth column indicates the probability of least probable symbol. For example, when the sampled pel signals A through G are the binary 0, as in the case of the Figure 2, the current pel signal X will have the binary 0 with a ratio of 100 : 1, and the probability of least probable symbol, i.e. the binary 1, is 0.0099. The bit pattern sampled by the window 30, 31, 32 and 33 is used as an address for accessing the state table. The contents of the third and fourth columns are updated by the algorithm in the control unit 27 to adapt with a quality of the original image. The algorithm maintains a total count of the number of occurrences of the symbols and revises the values of the probability of least probable symbol in the manner as described in the article by G.G. Landon, Jr. and IBM Technical Disclosure Bulletin in Volume 22, No. 7, December 1979, pp. 2880 - 2882, entitled "Method for Coding Counts to Coding Parameters" by G.G. Landon, Jr. and J.J. Rissanen. The latter article describes that it is desired to detect changes in the symbol probabilities from observed symbol occurrences and to modify the least probable symbol probability.

Referring to the Figure 2 again, the seven bit state A through G or the bit pattern 0000000 for the current pel signal X at the position (0, 0) accesses the entry 0 of the state table. The algorithm compares the actual value of the current pel signal X at the position (0, 0) with the content of the third column. If the current pel signal X is the binary 0, the result of the comparison is YES. And, the result of the comparison and the value of the probability of least probable symbol in the fourth column in the entry 0 are supplied to the adaptive arithmetic coder. Then, the window 30 is shifted by the two pel positions in the X direction to process the next current pel X, at position (2, 0), as shown in the Figure 3. The bit pattern A, B, C, D, E, F, G is used as an address to access the state table, and the result of the comparison of the current pel signal X at the position (2, 0) with the content of the third column of the state table, and the value of the fourth column are supplied to the adaptive arithmetic coder. In this manner, every other or double circled pel signals at the positions (0, 0), (2, 0), (4, 0), (6, 0) ... of the pel line 0 are processed. The adapter arithmetic coder generates a code string or compressed data of the processed pel signals of the 120 pel resolution. Once the pel line 0 has been processed, the window 30 is positioned to process the first pel signal at position (0, 2) of the pel line 2, and the pel signals at the positions (0, 2), (2, 2), (4, 2), (6, 2) ... of the pel line 2 are processed in the above manner. The same process is repeated for the pel signals of the 120 pel resolution in the even numbered pel lines of the original image data stored in the input image buffer 24A. It is apparent that the image data in the input image buffer 24A has the 240 pel resolution, and the processed double circle pel signals, i.e. every other pel signals in the X and Y direction, constructs the image of the 120 pel resolution, so that the code string or the first compressed data generated by the adaptive arithmetic coder represents the image of the 120 pel resolution. The first compressed data of the image pels of the 120 pel resolution is transmitted to the buffer memory 3 of the host processor 1 through the buffer memory 7 and the transmission line 6, and stored into the data memory 4 under the control of the control unit 5 of the host processor 1.

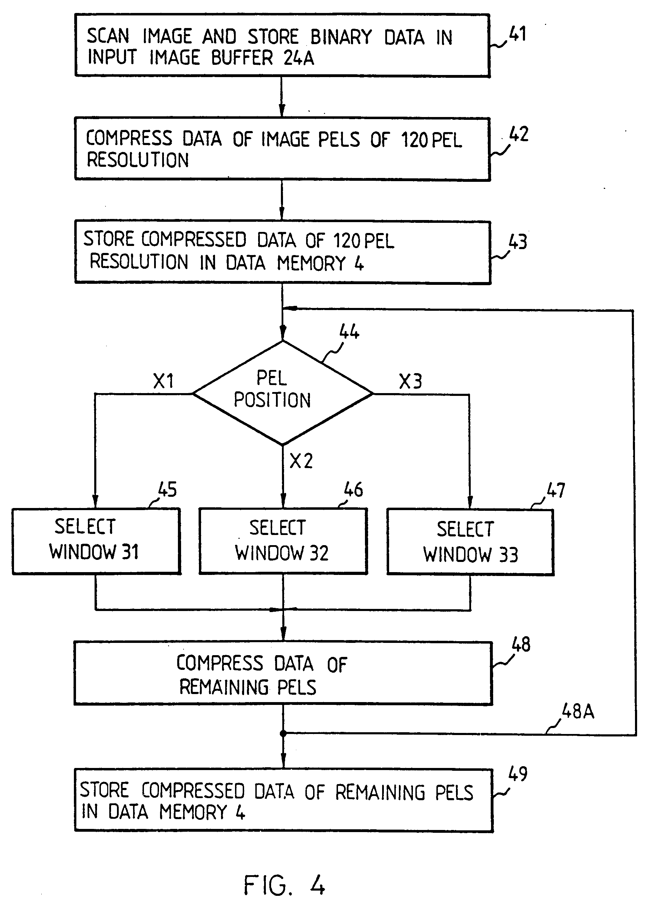

The flow of the above operations is shown in the blocks 41, 42 and 43 in the Figure 4.

### Generation of Second Compressed Data of the Remaining Image Pels

To generate the second compressed data of the remaining pels in the original image, the pel signals retained in the input image buffer 24A are again accessed. The pel signals are retained in the input image buffer 24A and are read out again by the windows 31, 32 and 33, until all of the remaining pel signals have been processed.

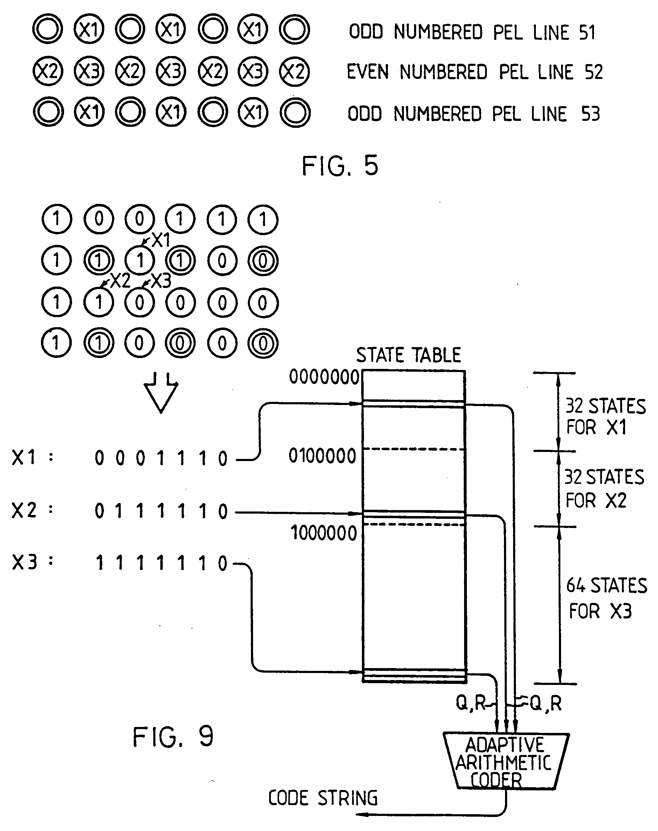

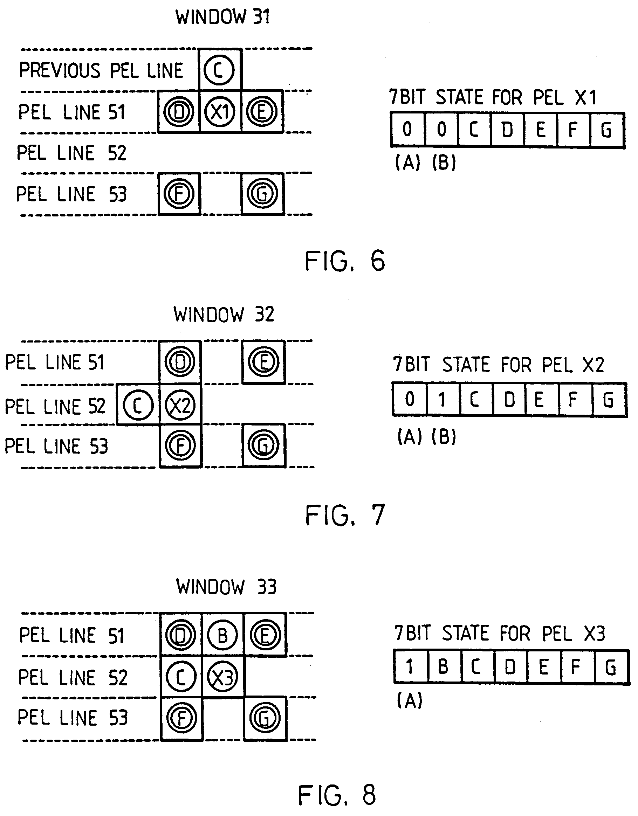

Referring to Figure 5, the remaining pel signals surrounded by the single circles in the input image buffer 24A are classified into the pel signals X1, X2 and X3 Depending upon their positions. The pel signal X1 exists between the horizontally arranged two pel signals of the 120 pel resolution. The pel signal X2 exists between the vertically arranged two pel signals of the 120 pel resolution. And, the pel signal X3 exists at the center of the four pel signals of the 120 pel resolution. The remaining pel signals X1, X2 and X3 are processed by using the windows 31, 32 and 33 shown in the Figure 1. The detail of the windows 31, 32 and 33 are shown in Figures 6, 7 and 8, wherein the small squares represent the sampling points of these windows.

It is noted that both the remaining pel signals surrounded by the single circles and pel signals of the 120 pel resolution surrounded by the double circles are sampled by the windows 31, 32 and 33, and one of the windows 31, 32 and 33 is selected depending upon the position of the current pel signal in the input image buffer 24A.

The control unit 27 of the terminal device 2 monitors the position of the current pel signal in the input image buffer 24A in a block 44 in the Figure 4, and supplies the control signal to the sampling unit 25 for selecting one of the windows 31, 32 and 33 depending upon the position of the current pel signal. The control unit 27 selects the window 31 in a block 45 in the Figure 4 since the first remaining pel signal X1 exists between the horizontally located two pel signals of the 120 pel resolution. The Figure 6 shows the detail of the window 31.

And, the bit pattern or the seven bit state is generated, wherein the bits A and B are 00 and the bits C, D, E, F and G are the binary values of the pel signals which surround the current pel signal X1.

Among the neighbouring pel signals sampled by the window 31, the first pel signal C is the upper pel signal in the previous pel line and located above the current pel signal X1, the second pel signal D and the third pel signal E are the left and right neighbouring pel signals of the current pel signal X1, and the fourth pel signal F and the fifth pel signal G are located in the pel line 53 after the next pel line 52 and located below the second and third pel signals D and E, respectively. The first pel signal C is the remaining pel and the second through fifth pel signals are the pel signals of the 120 pel resolution. The value 00 of the bits A and B represents that the current pel signal being processed is the pel signal X1. The seven bit state or bit pattern is supplied to the adaptive arithmetic coding compression/decompression unit 26, and is used as an address for accessing one entry in the state table described hereinbefore. The compression algorithm compares the current pel signal X1 with the content of the third column of the accessed entry, i.e. the most probable symbol, and supplies the result of the comparison and the value of the probability of the least probable symbol in the entry to the adaptive arithmetic coder of the unit 26. The adaptive arithmetic coder generates a code string or compressed data of the processed pel signal in a block 48 of the Figure 4. After the first pel signal X1 has been processed, the compression algorithm finds out the next remaining pel signal in the current pel line, recognizes the next pel signal as the X1, and selects the window 31, as shown by a loop 48A in the Figure 4. In this manner, the remaining pel signals in the current pel line are processed, and the compressed data is formed.

The control unit 27 finds out that the next pel line, i.e. the even numbered pel line 52 in the Figure 5, includes the alternate pel signals X2 and X3. In the block 44 in the Figure 4, the control unit 27 detects the position of the first pel signal, recognizes it as the X2, and, in the block 46, selects the window 32. The window 32 is shown in the Figure 7, wherein the bits A and B are 01 and the bits C, C, E, F and G are the binary values of the pel signals which surround the current pel signal X2. The first pel signal C is the left neighbouring pel signal in the current pel line 52, the second pel signal D is located in the previous pel line 51 above the current pel signal X2, the third pel signal E is the pel signal after the next pel signal to the second pel signal D in the previous pel line 51, the fourth pel signal F is located in the next pel line 53 below the current pel signal X2, and the fifth pel signal G is located in the next pel line 53 below the third pel signal E. The first pel signal C is the remaining pel signal and the second through fifth pel signals B - G are the pel signals in the 120 pel resolution.

The values 01 of the bits A and B represents that the current pel signal being processed is the X2. The seven bit state or bit pattern is supplied to the adaptive arithmetic coding compression/decompression unit 26, and is used as an address for accessing one entry in the state table described hereinbefore. The compression algorithm compares the current pel signal X2 with the content of the third column of the accessed entry, and supplies the result of the comparison and the value of the probability of the least probable symbol in the entry to the adaptive arithmetic coder of the unit 26. The adapter arithmetic coder generates a code string or compressed data of the processed pel signal in the block 48 of the Figure 4.

The control unit 27 determines the position of the next pel signal of the pel signal X2, and finds out that the next pel signal is classified as the pel signal X3, in the block 44 of the Figure 4, and, in the block 47, selects the window 33. The window 33 is shown in the Figure 8, wherein the value of the bit A is 1, and the bits, B, C, D, E, F and G are the binary values of the pel signals which surround the current pel signal X3. The first pel signal B is the upper pel signal in the previous pel line 51 above the current pel signal X3, the second pel signal C is the left neighbouring pel signal in the current pel line 52, the third pel signal D is the left upper diagonal pel signal in the previous pel line 51 from the current pel signal X3, the fourth pel signal E is the right upper diagonal pel signal in the previous pel line 51 from the current pel signal X3, the fifth pel signal F is the left lower diagonal pel signal in the next pel line 53 from the current pel signal X3, and the sixth pel signal G is the right lower diagonal pel signal in the next pel line 53 from the current pel signal X3. The first and second pel signals B and C are the remaining pel signals, and the third through sixth pel signals are the pel signals in the 120 pel resolution. The value 1 of the bit A represents that the current pel signal being processed is the X3.

The seven bit state or bit pattern is supplied to the adaptive arithmetic coding compression/decompression unit 26, and is used as an address for accessing one entry in the state table described hereinbefore. The compression algorithm compares the current pel signal X3 with the content of the third column of the accessed entry, and supplies the result of the comparison and the value of the probability of the least probable symbol in the entry to the adapter arithmetic coder of the unit 26. The adapter arithmetic coder generates a code string or compressed data of the processed pel signal in the block 48 of the Figure 4.

The control unit 27 returns to the block 44 to determine the pel signal at the next pel position, and finds out the pel signal X2, as shown in the Figure 5. This pel signal X2 is processed in the above described manner, then the next pel signal X3 is processed. In this manner, all remaining pel signal in the pel line 52 shown in the Figure 5 are processed as the X2 and X3, then the remaining pel signals in the pel line 53 are processed as the X1. The operations are repeated until all remaining pel signals in the input image buffer 24A have been processed. The second compressed data of the remaining pel signals is stored in the data memory 4 through the buffer memory 7 and the buffer memory 3. The flow of the processes of the remaining pel signals are also shown by the white thick arrows in the Figure 1.

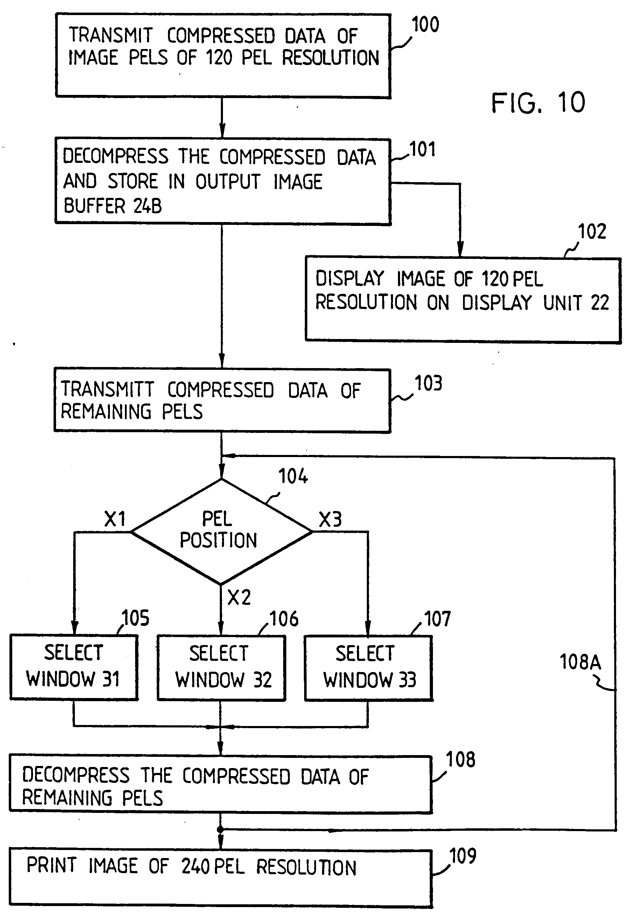

Figure 9 shows an example of the compression of the remaining pel signals X1, X2 and X3. An example of the pel signals of the original image of the text document is shown, wherein the double circled pel signals represent the pels of the 120 pel resolution, and the single circled pel signals represent the remaining pels, as described hereinbefore.

The dot pattern "0001110" is the seven state for the remaining pel signal X1, which is sampled by the window 31 shown in the Figure 6. The dot pattern "0111110" is the seven state for the remaining pel signal X2, which is sampled by the window 32. And, the dot pattern "1111110" is the seven state for the remaining pel signal X3, which is sampled by the window 33. The state table and the adaptive arithmetic coder of the adaptive arithmetic coding compression/decompression unit 26 are also shown in the Figure 9. For the remaining pel signal X1, the compression algorithm accesses the entry of the address "0001110" in the state table and supplies (a) the result of the comparison of the current pel signal X1 and the most probable symbol in the third column of the entry and (b) the content of the fourth column, i.e. the probability of least probable symbol to the adaptive arithmetic coder. In the Figure 9, the result of the comparison is shown as "R", and the content of the fourth column is shown as "Q". The adaptive arithmetic coder generates the code string or the compressed data. In the same manner, the remaining pel signals X2 and X3 are processed. The state table includes the 64 entries or states, as shown in the Table hereinbefore and the Figure 9, wherein the first 32 states are assigned for the remaining pel signals X1, the second 32 states are assigned for the remaining pel signals X2, and the last 64 states are assigned for the remaining pel signals X3. it is noted that the state table is commonly used to compress the image data of the 120 pel resolution, and is used for decompressing the first and second compressed data, as stated hereinafter.

### Decompression of the Compressed Data

In the decompression processes of (a) the first compressed data of image pels of 120 pel resolution, and/or (b) compressed data of the remaining pels which have been stored in the data memory 4 of the host processor 1, the windows 30, 31,32 and 33 and the static table which are used in the compression process are commonly used, and the adaptive arithmetic decoder is used. The decompress process or the reproduction of the original image is started from the pel at the position (0, 0), as shown in the Figures 1 and 2. These figures are, therefore, commonly referred in the decompression process. There exist operational differences between the compression process and the decompression process, which will be apparent in the description hereinafter.

### Decompression of Image Pels of the 120 Pel Resolution

It is frequently required to display the original image of the document on the display unit 22 which has the 120 pel resolution. The display unit 22 is the example of the output unit, hence a printer of the 120 pel resolution could be used in place of the display unit 22.

The flow of the data is shown by black thick arrows in the Figure 1, and the operational flow is shown in the Figure 10.

In a block 100 of the Figure 10, the first compressed data of the image pels of the 120 pel resolution is fetched from the data memory 4 of the host processor 1, and transmitted to the unit 26 through the buffer memory 3 and the buffer memory 7. Only the first compressed data of the image pels of the 120 pel resolution is used in this process, and the second compressed data of the remaining pels is not used.

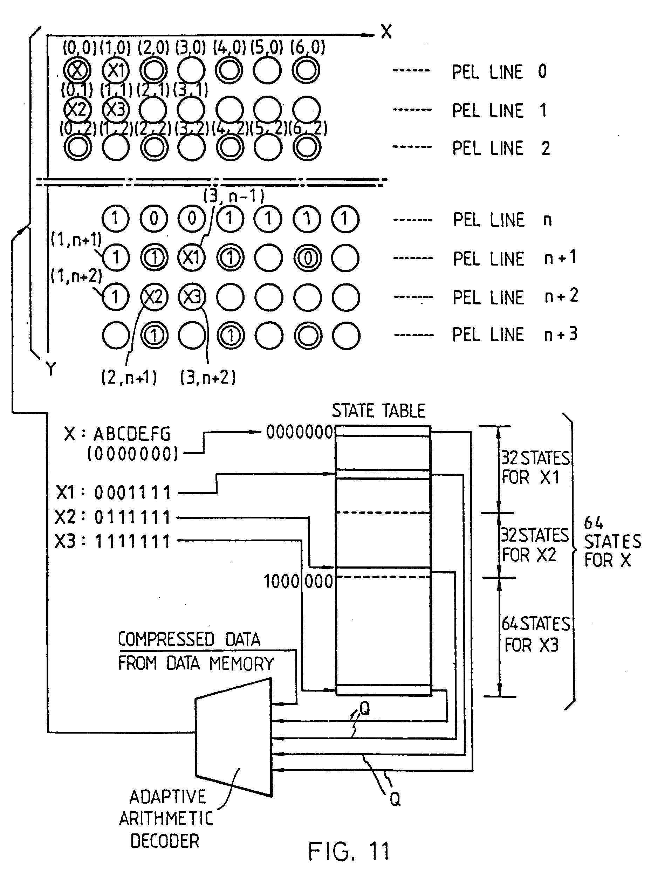

In a block 101 of the Figure 10, the transmitted first compressed data is decompressed by the static table and the adaptive arithmetic decoder in the adaptive arithmetic coding compression/decompression unit 26. The decompression algorithm in the control unit 27 selects the window 30 and monitors the pel position being reproduced to control the movement of the window 30. The reproduced pel signals are stored in the output image buffer 24B. Figure 11 shows the decompression process of both (a) the first compressed data of the image pels of the 120 pel resolution and (b) second compressed data of the remaining pels. Partial reference to the Figure 11 is made in the decompression of the first compressed data.

The decompression algorithm in the control unit 27 positions the window 30 on the output image buffer 24B at the position shown in the Figure 2. In this position, the values of the sampled bits A through G are all zero. Referring to the Figure 11, the seven bit state or bit pattern "0000000" is supplied to the state table to access the entry of the address "0000000", and the content of the forth column of the entry, i.e. the probability of least probable symbol which is shown as Q in the Figure 11 is supplied to the adaptive arithmetic decoder as one input. The code string or the first decompressed data of image pels of the 120 pel resolution transmitted from the data memory 4 of the host processor 1 is supplied to the adaptive arithmetic decoder as the other input. And, the adaptive arithmetic decoder reproduces the pel signal at the position (0, 0) and stores the reproduced pel signal in the pel position (0, 0) of the output image buffer 24B. Next, the decompression algorithm rightwardly shift the window 30 on the output image buffer 24B by the two pel positions, as shown in the Figure 3 and the pel signal of the pel position (2, 0) is reproduced in the same manner as that of the pel signal at (0, 0), and the reproduced pel signal is stored in the pel position (2, 0) in the output image buffer 24B. In this manner, the pel signals of the 120 pel resolution are reproduced and stored in the alternate pel positions (0, 0), (2, 0), (4, 0) ..., (0, 2), (2, 2) ... the last position in the output image buffer 24B. The reproduced pel signals of the image pels of the 120 pel resolution which are shown as the double circled pel signals are supplied to the memory 28 of the 120 pel resolution shown in the Fig. 1 then supplied to the display unit 22 of the 120 pel resolution. This operation is shown as a block 102 in the Figure 10.

It is noted that in the decompression process of the image pels of the 120 pel resolution, only the double circled pel signals in the Figure 11 are reproduced, and the single circled pel signals at the positions (1, 0), (3, 0), (5, 0) ... in the pel line 0, at the positions (0, 1), (1, 1) ... in the pel line 1, at the positions (1, 2), (3, 2) ... in the pel line 2, and the single circled pel signals in the pel lines n, n+1, n+2 and n+3 have not been reproduced yet, so that at the end of the decompression of the whole image of the original document at the 120 pel resolution, all the single circled pel positions in the output image buffer 24B do not contain the reproduced pel signals. The bits shown in the single circled pel positions in the pel lines n, n+1, n+2 and n+3 in the Figure 11 represent examples of the reproduced pel signals in the next description.

### Decompression of the Original Image of the 240 Pel Resolution

It is also frequently required to print the original image of the text document by the printer 23 of the 240 pel resolution.

To reproduce the original image of the 240 pel resolution, the transmission and decompression of the first compressed data representing the image pel of the 120 pel resolution described above, which are indicated by the black thick arrows in the Figure 1, and the transmission and decompression of the second compressed data representing the remaining pels which are indicated by shaded thick arrows are performed.

To simplify the description, the first compressed data of the image pels of the 120 pel resolution has been transmitted to the terminal device 2, and the reproduced pel signals of the 120 pel resolution have been stored in the output image buffer 24B, as shown in the double circled pel signals in the Figure 11, through the blocks 100 and 101 of the Figure 10.

The process proceeds to a block 103 of the Figure 10. The second compressed data of the remaining pels is transmitted to the terminal device 2 through the buffer memory 3, and is supplied as one input of the adaptive arithmetic decoder, as shown in the Figure 11.

The decompression algorithm in the control unit 27 starts the decompression process from the remaining pel, i.e. the single circled pel, at the position (1, 0) shown in the Figure 11. The algorithm detects the position (1, 0) as shown by a block 104 in the Figure 10, and treats the pel signal as the pel signal X1 since two double circled pel signals exist at both left and right side positions (0, 0) and (2, 0) of the current pel signal at (1, 0). And in a block 105 of the Figure 10, the decompression algorithm selects the window 31 for the pel signal X1 which is shown in the Figure 6. The binary values of the sampled neighbouring pel signals by the window 31 are the seven bit state or the dot pattern, and, in a block 108 of the Figure 10, are supplied to the state table as the address for accessing the entry of the state table. The value Q, i.e. the probability of least probable symbol in the accessed entry is supplied to the adaptive arithmetic decoder, as shown in the Figure 11, to reproduce the pel signal X1. The reproduced pel signal X1 is stored in the pel position (1, 0) of the output image buffer 24B. The decompression algorithm finds out the next remaining pel position (3, 0), recognizes the pel signal at the position (3, 0) as the pel signal X1, and selects the window 31 to reproduce the next pel signal X1. In this manner, the remaining pel signals, i.e. single circled pel signals in the pel line 0 are reproduced in the output image buffer 24B. The decompression algorithm determines that the remaining pel signal at the position (0, 1) in the pel line 1 is the pel signal X2, selects, in a block 106, the window 32 for the pel signal X2 shown in the Figure 7, reproduces the pel signal X2, and stores it in the pel position (0, 1) in the block 108. The algorithm returns to the block 104, determines that the next pel signal at (1, 1) is the pel signal X3, selects, in a block 107, the window 33 for the pel signal X3 shown in the Figure 8, reproduces the pel signal X3, and stores it in the pel position (1, 1) in the block 108. In this manner, the remaining pel signals, i.e. single circled pel signals, existing between the already reproduced double circled pel signals are sequentially reproduced and stored in the output image buffer 24B. It is assumed that the decompression process of the remaining pel signals has been completed to the position (1, n+1) shown in the Figure 11. The seven bit state for the pel signal X1 at the position (3, n+1) which is sampled by the window 31 of the Figure 6, is "0001111", as shown in the Figure 11. The value Q in the accessed entry of the state table is supplied to the adaptive arithmetic decoder along with the compressed data, and it is assumed that the reproduced pel signal X2 stored at the position (3, n+1) is the binary 1, as shown above the output line of the decoder, and that the decompression to the pel position (1, n+2) in the pel line n+2 has been completed. Next, the decompression algorithm treats the pel signal at the position (2, n+2) as the pel signal X2 and selects the window 32 of the Figure 7. The seven bit state for the pel signal X2 at (2, n+2) is "0111111", as shown in the Figure 11. It is assumed that the reproduced pel signal X2 at (2, n+2) is the binary 1, as shown in the Figure 11. Next, the decompression algorithm finds out that the next pel signal to be reproduced at (3, n+2) is the pel signal X3, and selects the window 33 of the Figure 8. The seven bit state for the pel signal X3 at (3, n+2) is "1111111", which is supplied to access the last entry of the static table, and the value Q is supplied to the decoder along with the compressed data, whereby the binary value of the pel signal X3 at (3, n+2) is reproduced.

The decompression process is repeatedly performed until the last remaining pel signal of the original image has been decompressed or reproduced. The composite image formed by the double circled pel signals reproduced from the first compressed data representing image pels of the 120 pel resolution and the single circled pel signals reproduced from the second compressed data representing the remaining pels, represents the original image of the text document of the 240 pel resolution. The reproduced image is supplied to the printer 23 of the 240 pel resolution for printing the image, in a block 109 in the Figure 10.

### The Effects of the Present Invention

The Figure 12 shows experimental results for comparing the data volumes of the first compressed data of the image pels of the 120 pel resolution and the second compressed data of the remaining pels in accordance with the present invention, with data volume of compressed data by Modified Modified Read algorithm (MMR), which is well known in the art. The experiments were performed on CCITT test charts #1 - #8. The CCITT means International Telegraph and Telephone Consultative Committee. The results show that the present invention realizes an average reduction of 18.5% for the charts in comparison with the MMR algorithm.

The remarkable reduction of the data volume was not performed when a fixed pattern window was commonly used for the remaining pel signals X1, X2 and X3 in compressing them by use of the adaptive arithmetic coder. The compression ratio was comparable to the results of the MMR shown in the Figure 12.

## Claims

1. An apparatus for processing pel signals of an original image comprising:
an input image buffer (24A) for storing pel signals representing said original image in pel positions arranged in rows and columns;
a data compression means (26) for generating first compressed data representing first pel signals stored in a first set of pel positions in said input image buffer, said first set comprising the positions at the intersections of every other one of said rows with every other one of said columns, and second compressed data representing remaining pel signals stored in the remaining pel positions in said input image buffer;
a data memory (4) for storing said first compressed data and said second compressed data;
a data decompression means (26) for decompressing said first compressed data to reproduce first pel signals, and decompressing said second compressed data to reproduce second pel signals;
an output image buffer (24B) storing said first reproduced pel signals in a first set of pel positions and storing said second reproduced pel signals in the remaining pel positions, wherein the pel positions in said output image buffer are arranged in rows and columns and said first set of positions in said output image buffer comprises the positions at the intersections of every other one of the rows with every other one of the columns;
characterised in that, during said generation of said first compressed data, each pel signal stored in said first set of pel positions in said input image buffer is sequentially fetched from the buffer together with a sample plurality of neighbouring pel signals in said first set of pel positions, and, during said generation of said second compressed data, each pel signal stored in said remaining pel positions is sequentially fetched from the input image buffer together with a sample plurality of neighbouring pel signals including at least one pel signal in one of said remaining pel positions and plural pel signals in said first set of pel positions, said first and second compressed data being generated, for each pel signal, in dependence on the respective sample plurality of neighbouring pel signals.

2. An apparatus according to claim 1, wherein a plurality of pel signal sensor windows (31, 32, 33) having different sampling patterns from each other for fetching a different sample plurality of pel signals are individually selectable for fetching, as a current pel signal, each of the pel signals stored in said remaining pel positions together with said sample plurality of neighbouring pel signals, the selection of a window being in accordance with the pel position of said current pel signal in said input image buffer.

3. An apparatus according to Claim 1 or Claim 2, wherein said original image is a text image, said data compression means is an adaptive arithmetic compression means, and said data decompression means is an adaptive arithmetic decompression means.

4. An apparatus according to Claim 2, wherein said plural windows (31,32,33) include:
a first window (31) for fetching, as a current pel signal, one remaining pel signal stored in one of said remaining pel positions in a current pel line, which signal is interposed between two horizontally aligned pel signals stored in adjacent ones of said first set of pel positions, a remaining pel signal stored in one of said remaining pel positions in a preceding pel line and positioned above said current pel signal, said two horizontally aligned adjacent pel signals, and two pel signals stored in said first set of pel positions in the next-but-one pel line to said current pel line and positioned below said two horizontally aligned adjacent pel signals, respectively;
a second window (32) for fetching, as a current pel signal, one remaining pel signal stored in one of said remaining pel positions in a current pel line, which signal is interposed between two vertically aligned pel signals stored in adjacent ones of said first set of pel positions in preceding and next pel lines to the current pel line, respectively, a remaining pel signal stored in an adjacent pel position to the left of said current pel signal, said two vertically aligned adjacent pel signals, and two pel signals stored in said preceding and next pel lines and positioned in the next-but-one pel positions to said two vertically aligned adjacent pel signals, respectively; and
a third window (33) for fetching, as a current pel signal, one remaining pel signal stored in one of said remaining pel positions in a current pel line and positioned at the centre of four pel signals stored in adjacent ones of said first set of pel positions in preceding and next pel lines to said current pel line, respectively, a remaining pel signal stored in one of said remaining pel positions in said preceding pel line and positioned above said current pel signal, a remaining pel signal stored in an adjacent pel position to the left of said current pel signal, and said four adjacent pel signals.

5. A method for processing pel signals of an original image comprising the steps of:
(a) storing (41) pel signals representing said original image in pel positions of an input image buffer (24A), said pel positions being arranged in rows and columns;
(b) sequentially fetching one pel signal stored in one of a first set of pel positions in said input image buffer along with plural neighbouring pel signals stored in said first set of pel positions, said first set comprising the pel positions at the intersections of every other one of said rows with every other one of said columns;
(c) supplying said one pel signal along with said plural neighbouring pel signals to a data compression means for generating (42), in dependence on said plural neighbouring pel signals, first compressed data representing said pel signals stored in said first set of pel positions;
(d) storing (43) said first compressed data in a data memory;
(e) sequentially fetching a first remaining pel signal stored in one of the remaining pel positions in said input image buffer along with plural neighbouring pel signals including at least one remaining pel signal and plural pel signals stored in said first set of pel positions;
(f) supplying said first remaining pel signal along with said plural neighbouring pel signals to said data compression means for generating (48), in dependence on said plural neighbouring pel signals, second compressed data representing said pel signals stored in said remaining pel positions;
(g) storing (49) said second compressed data in said data memory;
(h) supplying (100) said first compressed data to a data decompression means for reproducing (101) first pel signals;
(i) storing said first pel signals in a first set of pel positions in an output image buffer (24B), wherein the pel positions in said output image buffer are arranged in rows and columns and said first set of positions in said output image buffer comprises the pel positions at the intersections of every other one of said rows and every other one of said columns.
(j) supplying (103) said second compressed data to said data decompression means for reproducing (108) second pel signals; and
(k) storing said second pel signals in remaining pel positions of said output image buffer.

6. A method according to Claim 5, wherein said original image is a text image, and said step (b) includes steps of selecting a window for fetching said one pel signal stored in said first set of pel position, as a current pel signal, together with said plural neighbouring pel signals in said first set of pel positions, and moving said window on said input image buffer until all pel signals in said first set of pel positions have been fetched as said current pel signal.

7. A method according to Claim 5, wherein said step (e) includes the step of selecting (45, 46, 47) one of a plurality of windows (31, 32, 33) depending upon the pel position of said first remaining pel signal in said input image buffer, said plural windows having different sampling patterns from each other for fetching different sample patterns of neighbouring pel signals.

8. A method according to Claim 7, wherein said plural windows include:
a first window (31) for fetching, as a current pel signal, one remaining pel signal stored in one of said remaining pel positions in a current pel line which signal is interposed between two horizontally aligned pel signals stored in adjacent ones of said first set of pel positions, a remaining pel signal stored in one of said remaining pel positions in a preceding pel line and positioned above said current pel signal, said two horizontally aligned adjacent pel signals, and two pel signals stored in said first set of pel positions in the next-but-one pel line to said current pel line and positioned below said two horizontally aligned adjacent pel signals, respectively;
a second window (32) for fetching, as a current pel signal, one remaining pel signal stored in one of said remaining pel positions in a current pel line which signal is interposed between two vertically aligned pel signals stored in adjacent ones of said first set of pel positions in preceding and next pel lines to the current pel line, respectively, a remaining pel signal stored in an adjacent pel position to the left of said current pel signal, said two vertically aligned adjacent pel signals, and two pel signals stored in said preceding and next pel lines and positioned in the next-but-one pel positions to said two vertically aligned adjacent pel signals, respectively;
and a third window (33) for fetching, as a current pel signal, one remaining pel signal stored in one of said remaining pel positions in a current pel line and positioned at the centre of four pel signals stored in adjacent ones of said first set of pel positions in preceding and next pel lines to said current pel line, respectively, a remaining pel signal stored in one of said remaining pel positions in said preceding pel line and positioned above said current pel signal, a remaining pel signal stored in an adjacent pel position to the left of said current pel signal, and said four adjacent pel signals.

9. A method according to Claim 5, wherein said compression means is an adapter arithmetic coding means.

## Patentansprüche

1. Eine Vorrichtung zur Verarbeitung von Bildelementsignalen aus einem Originalbild, in der enthalten sind:
ein Eingabe-Bildpuffer (24A) zum Speichern von Bildelementsignalen, die das Originalbild in Bildelementpositionen darstellen, die in Reihen und Spalten angeordnet sind;
ein Datenkompressionsmittel (26) zur Generierung von ersten komprimierten Daten, die erste Bildelementsignale darstellen, die in einem ersten Satz von Bildelementpositionen in dem Eingabe-Bildpuffer gespeichert sind, wobei der erste Satz die Positionen in den Schnittpunkten von jeder zweiten Reihe und jeder zweiten Spalte enthält und die zweiten komprimierten Daten die verbleibenden Bildelementsignale darstellen, die in den verbleibenden Bildelementpositionen in dem Eingabe-Bildpuffer gespeichert sind;
ein Datenspeicher (4) zum Speichern der ersten komprimierten Daten und der zweiten komprimierten Daten;
ein Datendekompressionsmittel (26) zur Dekompression der ersten komprimierten Daten, um die ersten Bildelementsignale zu reproduzieren und zur Dekompression der zweiten komprimierten Daten, um die zweiten Bildelementsignale zu reproduzieren;
ein Ausgabe-Bildpuffer (24B) zum Speichern der ersten reproduzierten Bildelementsignale in einem ersten Satz von Bildelementpositionen und zum Speichern der zweiten reproduzierten Bildelementsignale in den verbleibenden Bildelementpositionen, wobei die Bildelementpositionen in dem Ausgabe-Bildpuffer in Reihen und Spalten angeordnet sind und der erste Satz von Positionen in dem Ausgabe-Bildpuffer die Positionen in den Schnittpunkten von jeder zweiten Reihe und jeder zweiten Spalte enthält;
dadurch gekennzeichnet, daß während der Generierung der ersten komprimierten Daten, jedes Bildelementsignal, das in dem ersten Satz von Bildelementpositionen in dem Eingabe-Bildpuffer gespeichert ist, zusammen mit einer Abtastvielzahl von benachbarten Bildelementsignalen in diesem ersten Satz von Bildelementpositionen aus dem Puffer abgerufen wird und während der Generierung der zweiten komprimierten Daten, jedes Bildelementsignal, das in den verbleibenden Bildelementpositionen gespeichert wurde, zusammen mit einer Abtastvielzahl von benachbarten Bildelementsignalen, die wenigstens ein Bildelementsignal in einem der verbleibenden Bildelementpositionen und mehrere Bildelementsignale in dem ersten Satz von Bildelementpositionen enthalten, nacheinander aus dem Eingabe-Bildpuffer abgerufen werden, wobei die ersten und zweiten komprimierten Daten, die für jedes Bildelementsignal generiert wurden, abhängig von der jeweiligen Abtastvielzahl der benachbarten Bildelementsignale sind.

2. Eine Vorrichtung gemäß Anspruch 1, wobei eine Vielzahl von Bildelementsignal-Sensorfenstern (31, 32, 33) sich voneinander unterscheidende Abtastmuster hat, um eine unterschiedliche Abtastvielzahl von Bildelementsignalen abzurufen, die einzeln zum Abruf als ein aktuelles Bildelementsignal wählbar sind, wobei jedes der Bildelementsignale, zusammen mit der Abtastvielzahl von benachbarten Bildelementsignalen, in den verbleibenden Bildelementpositionen gespeichert ist, und die Auswahl eines Fensters in Übereinstimmung mit der Bildelementposition des aktuellen Bildelementsignals in dem Eingangs-Bildpuffer erfolgt.

3. Eine Vorrichtung gemäß Anspruch 1 oder Anspruch 2, wobei das Originalbild ein Textbild ist, die Datenkompressionsmittel adaptive arithmetische Kompressionsmittel und die Datendekompressionsmittel adaptive arithmetische Dekompressionsmittel sind.

4. Eine Vorrichtung gemäß Anspruch 2, wobei die zahlreichen Fenster (31, 32, 33) enthalten:
ein erstes Fenster (31), um als ein aktuelles Bildelementsignal ein verbleibendes Bildelementsignal abzurufen, das in einer der verbleibenden Bildelementpositionen in einer aktuellen Bildelementzeile gespeichert ist, deren Signal zwischen zwei horizontal ausgerichteten Bildelementsignalen liegt, die neben einem der ersten Sätze der Bildelementpositionen gespeichert sind, wobei ein verbleibendes Bildelementsignal in einer der verbleibenden Bildelementpositionen in einer vorhergehenden Bildelementzeile gespeichert ist und über dem aktuellen Bildelementsignal positioniert wurde, wobei die beiden horizontal ausgerichteten, aneinandergrenzenden Bildelementsignale und die beiden Bildelementsignale in dem ersten Satz von Bildelementpositionen in der nächsten- aber-einzigen Bildelementzeile in der aktuellen Bildelementzeile gespeichert bzw. unter den beiden horizontal ausgerichteten, aneinandergrenzenden Bildelementsignalen positioniert wurden;
ein zweites Fenster (32), um als ein aktuelles Bildelementsignal ein verbleibendes Bildelementsignal abzurufen, das in einer der verbleibenden Bildelementpositionen in einer aktuellen Bildelementzeile gespeichert ist, deren Signal zwischen zwei vertikal ausgerichteten Bildelementsignalen liegt, die neben einem der ersten Sätze von Bildelementpositionen in vorhergehenden und nächsten Bildelementzeilen in der aktuellen Bildelementzeile gespeichert sind, bzw. ein verbleibendes Bildelementsignal, das in einer der benachbarten Bildelementposition links von dem aktuellen Bildelementsignal gespeichert wurde, wobei die beiden vertikal ausgerichteten, aneinandergrenzenden Bildelementsignale und die beiden Bildelementsignale in den vorhergehenden und nächsten Bildelementzeilen gespeichert bzw. in der nächsten-aber-einzigen Bildelementposition zu den beiden vertikal ausgerichteten, aneinandergrenzenden Bildelementsignalen positioniert wurden; und
ein drittes Fenster (33), um als ein aktuelles Bildelementsignal ein verbleibendes Bildelementsignal abzurufen, das in einer der verbleibenden Bildelementpositionen in einer aktuellen Bildelementzeile gespeichert bzw. in dem Zentrum von vier Bildelementsignalen positioniert wurde, die nebeneinander in einem der ersten Sätze von Bildelementpositionen in vorhergehenden und nächsten Bildelementzeilen zu der aktuellen Bildelementzeile gespeichert sind, wobei ein verbleibendes Bildelementsignal, das in einer der verbleibenden Bildelementpositionen in der vorhergehenden Bildelementzeile gespeichert und über dem aktuellen Bildelementsignal positioniert wurde, und ein verbleibendes Bildelementsignal in einer benachbarten Bildelementposition links von dem aktuellen Bildelementsignal und den vier angrenzenden Bildelementsignalen gespeichert wurde.

5. Ein Verfahren zur Verarbeitung von Bildelementsignalen aus einem Originalbild, das Schritte enthält:
(a) zum Speichern (41) der Bildelementsignale, die das Originalbild in Bildelementpositionen aus einem Eingabe-Bildpuffer (24A) darstellen, wobei die Bildelementpositionen in Reihen und Spalten angeordnet sind;
(b) zum sequentiellen Abruf eines Bildelementsignals, das in einem ersten Satz von Bildelementpositionen in dem Eingabe-Bildpuffer gespeichert ist, zusammen mit einer Vielzahl von benachbarten Bildelementsignalen, die in diesem ersten Satz von Bildelementpositionen gespeichert sind, wobei der erste Satz die Bildelementpositionen in den Schnittpunkten von jeder zweiten Reihe und jeder zweiten Spalte enthält;
(c) zur Lieferung eines Bildelementsignals zusammen mit der Vielzahl von benachbarten Bildelementsignalen in ein Datenkompressionsmittel, um in Abhängigkeit der Vielzahl von benachbarten Bildelementsignalen erste komprimierte Daten zu generieren (42), welche die Bildelementsignale darstellen, die in dem ersten Satz von Bildelementpositionen gespeichert wurden;
(d) zur Speicherung (43) der ersten komprimierten Daten in einen Datenspeicher;
(e) zum sequentiellen Abruf eines ersten verbleibenden Bildelementsignals, das in einer der verbleibenden Bildelementpositionen in dem Eingabe-Bildpuffer gespeichert ist, zusammen mit einer Vielzahl von Bildelementsignalen, die wenigstens ein verbleibendes Bildelementsignal und mehrere Bildelementsignale enthalten, die in diesem ersten Satz von Bildelementpositionen gespeichert wurden;
(f) zur Lieferung des ersten verbleibenden Bildelementsignals zusammen mit mehreren benachbarten Bildelementsignalen in die Datenkompressionsmittel, um in Abhängigkeit mehrerer benachbarter Bildelementsignale die zweiten komprimierten Daten zu generieren (48), welche die Bildelementsignale darstellen, die in den verbleibenden Bildelementpositionen gespeichert wurden;
(g) zur Speicherung (49) der zweiten komprimierten Daten in den Datenspeicher;
(h) zur Lieferung (100) der ersten komprimierten Daten in ein Datendekompressionsmittel zur Reproduktion (101) von ersten Bildelementsignalen;
(i) zur Speicherung der ersten Bildelementsignale in einem ersten Satz von Bildelementpositionen in einem Ausgabe-Bildpuffer (24B), wobei die Bildelementpositionen in dem Ausgabe-Bildpuffer in Reihen und Spalten angeordnet sind und der erste Satz von Positionen in dem Ausgabe-Bildpuffer die Bildelementpositionen in den Schnittpunkten von jeder zweiten Reihe und jeder zweiten Spalte enthält;
(j) zur Lieferung (103) der zweiten komprimierten Daten in das Datendekompressionsmittel zur Reproduktion (108) der zweiten Bildelementsignale; und
(k) zur Speicherung der zweiten Bildelementsignale in die verbleibenden Bildelementpositionen des Ausgabe-Bildpuffers.

6. Ein Verfahren gemäß Anspruch 5, wobei das Originalbild ein Textbild ist, und der Schritt (b) Schritte zur Auswahl eines Fensters zum Abruf eines Bildelementsignals enthält, das in dem ersten Satz der Bildelementposition als aktuelles Bildelementsignal gespeichert ist, zusammen mit mehreren benachbarten Bildelementsignalen in diesem ersten Satz von Bildelementpositionen, und zum Bewegen des Fensters in dem Eingabe-Bildpuffer, bis alle Bildelementsignale in dem ersten Satz von Bildelementpositionen als aktuelles Bildelementsignal abgerufen wurden.

7. Ein Verfahren gemäß Anspruch 5, wobei der Schritt (e) den Schritt zur Auswahl (45, 46, 47) eines aus einer Vielzahl von Fenstern (31, 32, 33) in Abhängigkeit der Bildelementposition des ersten verbleibenden Bildelementsignals in dem Eingabe-Bildpuffer enthält, die zahlreichen Fenster sich voneinander unterscheidende Abtastmuster zum Abruf der verschiedenen Abtastmuster von benachbarten Bildelementsignale haben.

8. Ein Verfahren gemäß Anspruch 7, wobei die zahlreichen Fenster enthalten:
ein erstes Fenster (31), um als ein aktuelles Bildelementsignal ein verbleibendes Bildelementsignal abzurufen, das in einer der verbleibenden Bildelementpositionen in einer aktuellen Bildelementzeile gespeichert ist, deren Signal zwischen zwei horizontal ausgerichteten Bildelementsignalen liegt, die neben einem der ersten Sätze der Bildelementpositionen gespeichert sind, wobei ein verbleibendes Bildelementsignal in einer der verbleibenden Bildelementpositionen in einer vorhergehenden Bildelementzeile gespeichert ist und über dem aktuellen Bildelementsignal positioniert wurde, wobei die beiden horizontal ausgerichteten, aneinandergrenzenden Bildelementsignale und die beiden Bildelementsignale in dem ersten Satz von Bildelementpositionen in der nächsten- aber-einzigen Bildelementzeile in der aktuellen Bildelementzeile gespeichert bzw. unter den beiden horizontal ausgerichteten, aneinandergrenzenden Bildelementsignalen positioniert wurden;
ein zweites Fenster (32), um als ein aktuelles Bildelementsignal ein verbleibendes Bildelementsignal abzurufen, das in einer der verbleibenden Bildelementpositionen in einer aktuellen Bildelementzeile gespeichert ist, deren Signal zwischen zwei vertikal ausgerichteten Bildelementsignalen liegt, die neben einem der ersten Sätze von Bildelementpositionen in vorhergehenden und nächsten Bildelementzeilen in der aktuellen Bildelementzeile gespeichert sind, bzw. ein verbleibendes Bildelementsignal, das in einer der benachbarten Bildelementposition links von dem aktuellen Bildelementsignal gespeichert wurde, wobei die beiden vertikal ausgerichteten, aneinandergrenzenden Bildelementsignale und die beiden Bildelementsignale in den vorhergehenden und nächsten Bildelementzeilen gespeichert bzw. in der nächsten-aber-einzigen Bildelementposition zu den beiden vertikal ausgerichteten, aneinandergrenzenden Bildelementsignalen positioniert wurden; und
ein drittes Fenster (33), um als ein aktuelles Bildelementsignal ein verbleibendes Bildelementsignal abzurufen, das in einer der verbleibenden Bildelementpositionen in einer aktuellen Bildelementzeile gespeichert bzw. in dem Zentrum von vier Bildelementsignalen positioniert wurde, die nebeneinander in einem der ersten Sätze von Bildelementpositionen in vorhergehenden und nächsten Bildelementzeilen zu der aktuellen Bildelementzeile gespeichert sind, wobei ein verbleibendes Bildelementsignal, das in einer der verbleibenden Bildelementpositionen in der vorhergehenden Bildelementzeile gespeichert und über dem aktuellen Bildelementsignal positioniert wurde, und ein verbleibendes Bildelementsignal in einer benachbarten Bildelementposition links von dem aktuellen Bildelementsignal und den vier angrenzenden Bildelementsignalen gespeichert wurde.

9. Ein Verfahren gemäß Anspruch 5, wobei das Kompressionsmittel ein adaptives arithmetisches Codiermittel ist.

## Revendications

1. Appareil pour traiter les signaux de pixels d'une image originale, comprenant :
une mémoire tampon vidéo d'entrée (24A) pour mémoriser les signaux de pixels représentant ladite image originale dans des positions de pixels disposées selon des lignes et des colonnes;
un dispositif de compression de données (26) pour générer des premières donnée comprimées représentant les premiers signaux de pixels mémorisés dans un premier ensemble de positions de pixels dans ladite mémoire tampon vidéo d'entrée, ledit premier ensemble comprenant les positions aux intersections d'une des dites lignes sur deux avec une des dites colonnes sur deux, et des deuxièmes données comprimées représentant les signaux de pixels restants mémorisés dans les positions de pixels restantes dans ladite mémoire tampon vidéo d'entrée;
une mémoire de données (4) pour enregistrer les dites premières données comprimées et les dites deuxièmes données comprimées;
un dispositif de décompression de données (26) pour décomprimer les dites premières donnés comprimées pour reproduire les premiers signaux de pixels, et pour décomprimer les dites deuxièmes données comprimées pour reproduire les dits deuxièmes signaux de pixels;
une mémoire tampon vidéo de sortie (24B) pour mémoriser les dits premiers signaux de pixels reproduits dans un premier ensemble de positions de pixels et pour mémoriser les dits deuxièmes signaux de pixels reproduits dans les positions de pixels restantes, dans laquelle les positions de pixels dans ladite mémoire tampon vidéo de sortie sont disposées en lignes et en colonnes, et ledit premier ensemble de positions dans ladite mémoire tampon vidéo de sortie comprend les positions aux intersections d'une des dites lignes sur deux avec une des dites colonnes sur deux;
caractérisé en ce que, au cours de ladite génération des dites premières données comprimées, chaque signal de pixel mémorisé dans ledit premier ensemble de positions de pixels dans ladite mémoire tampon vidéo d'entrée est lu séquentiellement dans la mémoire tampon en même temps qu'un échantillon de signaux de pixels voisins dans ledit premier ensemble de positions de pixels, et, au cours de ladite génération des dites deuxièmes données comprimées, chaque signal de pixel mémorisé dans les dites positions de pixels restantes est lu séquentiellement dans la mémoire tampon vidéo d'entrée en même temps qu'un échantillon de signaux de pixels voisins comprenant au moins un signal de pixel de l'une des positions de pixels restantes et plusieurs signaux de pixels du dit premier ensemble de positions de pixels, les dites premières et deuxièmes données comprimées étant générées, pour chaque signal de pixel, en fonction de l'échantillon respectif des signaux de pixels voisins.

2. Appareil selon la revendication 1, dans lequel une pluralité de fenêtres de détection de signaux de pixels (31, 32, 33) ayant des configurations d'échantillonnage différentes les unes des autres pour lire des échantillons de signaux de pixels différents, sont individuellement sélectionnables pour lire, sous la forme d'une signal de pixel courant, chacun des signaux de pixels enregistrés dans les dites positions de pixels restantes ainsi que ledit échantillon de signaux de pixels voisins, la sélection d'une fenêtre dépendant de la position de pixel du dit signal de pixel courant dans ladite mémoire tampon vidéo d'entrée.

3. Appareil selon la revendication 1 ou 2, dans lequel ladite image originale est une image textuelle, ledit dispositif de compression de données est un dispositif de compression arithmétique adaptatif, et ledite dispositif de décompression est un dispositif de décompression arithmétique adaptatif.

4. Appareil selon la revendication 2, dans lequel ladite pluralité de fenêtres (31, 32, 33) comprend :
une première fenêtre (31) pour lire respectivement, en tant que signal de pixel courant, un signal de pixel restant enregistré dans l'une des dites positions de pixels restantes dans une ligne de pixels courante, ce signal étant interposé entre deux signaux de pixels alignés horizontalement dans des positions adjacentes du dit premier ensemble de positions de pixels; un signal de pixel restant enregistré dans l'une des dites positions de pixels restantes d'une ligne de pixels précédente et situé au-dessus du signal de pixel courant; les dits deux signaux de pixels adjacents alignés horizontalement; et deux signaux de pixels enregistrés dans ledit premier ensemble de positions de pixels dans la ligne de pixels suivant la ligne située en-dessous de la ligne de pixels courante, et placés sous les dits deux signaux de pixels adjacents alignés horizontalement;
une deuxième fenêtre (32) pour lire respectivement, en tant que signal de pixel courant, un signal de pixel restant enregistré dans l'une des dites positions de pixels restantes d'une ligne de pixels courante, ce signal étant interposé entre deux signaux de pixels alignés verticalement enregistrés, respectivement, dans des positions adjacentes du dit premier ensemble de positions de pixels de la ligne précédant et de la ligne suivant la ligne de pixels courante; un signal de pixel restant enregistré dans une position de pixel située immédiatement à gauche du signal de pixel courant; les dits deux signaux de pixels adjacents alignés verticalement; et deux signaux de pixels enregistrés respectivement dans ladite ligne de pixels précédente et ladite ligne de pixels suivante et placés dans des positions de pixels décalées d'une position de pixel vers la droite par rapport aux dits deux signaux de pixels adjacents alignés verticalement;
une troisième fenêtre (33) pour lire respectivement, en tant que signal de pixel courant, un signal de pixel restant enregistré dans l'une des dites positions de pixels restantes d'une ligne de pixels courante et placé au centre de quatre signaux de pixels enregistrés respectivement dans des positions adjacentes du dit premier ensemble de positions de pixels de la ligne de pixels précédant et de la ligne de pixels suivant la ligne de pixels courante; un signal de pixel restant enregistré dans l'une des dites positions de pixels restantes de la ligne de pixels précédente et placé au-dessus du dit signal de pixel courant; un signal de pixel restant enregistré dans une position de pixel située immédiatement à gauche du dit signal de pixel courant; et les dits quatre signaux de pixels adjacents.

5. Procédé pour traiter les signaux de pixels d'une image originale, comprenant les étapes consistant à :
(a) mémoriser (41) les signaux de pixels représentant ladite image originale dans les positions de pixels d'une mémoire tampon vidéo d'entrée (24A), les dites positions étant disposées en lignes et en colonnes;
(b) lire séquentiellement un signal de pixel mémorisé dans l'une des positions d'un premier ensemble de positions de pixels dans ladite mémoire tampon vidéo d'entrée ainsi qu'une pluralité de signaux de pixels voisins mémorisés dans ledit premier ensemble de positions de pixels, ledit premier ensemble comprenant les positions de pixels aux intersections d'une des dites lignes sur deux avec une des dites colonnes sur deux;
(c) transmettre ledit signal de pixel, ainsi que ladite pluralité de signaux de pixels voisins, à un dispositif de compression de données pour générer (42), en fonction de ladite pluralité de signaux de pixels voisins, des premières données comprimées représentant les dits signaux de pixels mémorisés dans ledit premier ensemble de positions de pixels;
(d) enregistrer (43) les dites premières données comprimées dans une mémoire de données;
(e) lire séquentiellement un premier signal de pixel restant mémorisé dans l'une des positions de pixels restantes dans ladite mémoire tampon vidéo, ainsi qu'une pluralité de signaux de pixels voisins comprenant au moins un signal de pixel restant et une pluralité de signaux de pixels mémorisés dans ledit premier ensemble de positions de pixels;
(f) transmettre ledit signal de pixel restant, ainsi que ladite pluralité de signaux de pixels voisins, au dit dispositif de compression de données pour générer (48), en fonction de ladite pluralité de signaux de pixels voisins, des deuxièmes données comprimées représentant les dits signaux de pixels mémorisés dans les dites positions de pixels restantes;
(g) enregistrer (49) les dites deuxièmes données comprimées dans ladite mémoire de données;
(h) transmettre (100) les dites premières données comprimées à un dispositif de décompression de données pour reproduire (101) les premiers signaux de pixels;
(i) mémoriser les dits premiers signaux de pixels dans un premier ensemble de positions de pixels d'une mémoire tampon vidéo de sortie (24B), les positions de pixels dans ladite mémoire tampon vidéo de sortie étant disposées en lignes et en colonnes et ledit premier ensemble de positions dans ladite mémoire tampon vidéo de sortie comprenant les positions de pixels aux intersections d'une des dites lignes sur deux avec une des dites colonnes sur deux;
(j) transmettre (103) les dites deuxièmes données comprimées au dit dispositif de décompression de données pour reproduire (108) les deuxièmes signaux de pixels; et
(k) mémoriser les dits deuxièmes signaux de pixels dans les positions de pixels restantes de ladite mémoire tampon vidéo de sortie.

6. Procédé selon la revendication 5, dans lequel l'image originale est une image textuelle, et l'étape (b) comprend les étapes consistant à sélectionner une fenêtre pour lire l'un des dits signaux de pixels enregistré dans ledit premier ensemble de positions de pixels, en tant que signal de pixel courant, ainsi que les dits signaux de pixels voisins dans ledit premier ensemble de positions de pixels, et à déplacer la fenêtre sur ladite mémoire tampon vidéo d'entrée jusqu'à ce que tous les signaux de pixels du dit premier ensemble de positions de pixels aient été lus sous forme de signal de pixel courant.

7. Procédé selon la revendication 5, dans lequel ladite étape (e) comprend une étape consistant à sélectionner (45, 46, 47) un fenêtre parmi une pluralité (31, 32, 33) en fonction de la position de pixel du dit premier signal de pixel restant dans ladite mémoire tampon vidéo d'entrée, les dites fenêtres ayant des configuration d'échantillonnage différentes les unes des autres pour lire différents échantillons de signaux de pixels voisins.

8. Procédé selon la revendication 7, dans lequel la pluralité de fenêtres comprend :
une première fenêtre (31) pour lire respectivement, en tant que signal de pixel courant, un signal de pixel restant enregistré dans l'une des dites positions de pixels restantes dans une ligne de pixels courante, ce signal étant interposé entre deux signaux de pixels alignés horizontalement dans des positions adjacentes du dit premier ensemble de positions de pixels; un signal de pixel restant enregistré dans l'une des dites positions de pixels restantes d'une ligne de pixels précédente et situé au-dessus du signal de pixel courant; les dits deux signaux de pixels adjacents alignés horizontalement; et deux signaux de pixels enregistrés dans ledit premier ensemble de positions de pixels dans la ligne de pixels suivant la ligne située en-dessous de la ligne de pixels courante, et placés sous les dits deux signaux de pixels adjacents alignés horizontalement;
une deuxième fenêtre (32) pour lire respectivement, en tant que signal de pixel courant, un signal de pixel restant enregistré dans l'une des dites positions de pixels restantes d'une ligne de pixels courante, ce signal étant interposé entre deux signaux de pixels alignés verticalement enregistrés, respectivement, dans des positions adjacentes du dit premier ensemble de positions de pixels de la ligne précédant et de la ligne suivant la ligne de pixels courante; un signal de pixel restant enregistré dans une position de pixel située immédiatement à gauche du signal de pixel courant; les dits deux signaux de pixels adjacents alignés verticalement; et deux signaux de pixels enregistrés respectivement dans ladite ligne de pixels précédente et ladite ligne de pixels suivante et placés dans des positions de pixels décalées d'une position de pixel vers la droite par rapport aux dits deux signaux de pixels adjacents alignés verticalement;
une troisième fenêtre (33) pour lire respectivement, en tant que signal de pixel courant, un signal de pixel restant enregistré dans l'une des dites positions de pixels restantes d'une ligne de pixels courante et placé au centre de quatre signaux de pixels enregistrés respectivement dans des positions adjacentes du dit premier ensemble de positions de pixels de la ligne de pixels précédant et de la ligne de pixels suivant la ligne de pixels courante; un signal de pixel restant enregistré dans l'une des dites positions de pixels restantes de la ligne de pixels précédente et placé au-dessus du dit signal de pixel courant; un signal de pixel restant enregistré dans une position de pixel située immédiatement à gauche du dit signal de pixel courant; et les dits quatre signaux de pixels adjacents.

9. Procédé selon la revendication 5, dans lequel ledit dispositif de compression est un dispositif à codage arithmétique adaptatif.
